# EUROPÄISCHE PATENTSCHRIFT

(11) **EP 2 780 249 B1**
(45) Veröffentlichungstag und Bekanntmachung des Hinweises auf die Patenterteilung: **28.12.2016**
(21) Anmeldenummer: 12729334.8
(22) Anmeldetag: 20.09.2012
(51) Int. Cl.: B65D 41/04, B65D 41/32

(54) **DICHT BLEIBENDER SCHRAUBVERSCHLUSS**
TIGHT SCREW CAP CLOSURE
FERMETURE ÉTANCHE À VIS

(30) Priorität: 22.09.2011 DE 102011114181
(43) Veröffentlichungstag der Anmeldung: 24.09.2014
(73) Patentinhaber: Rundpack AG, 9444 Diepoldsau (CH)
(72) Erfinder: ORTNER, Johann, A-9500 Villach (AT)
(74) Vertreter: Burger, Hannes
(86) Internationale Anmeldenummer: PCT/AT2012/050139
(87) Internationale Veröffentlichungsnummer: WO 2013/040621

(56) Entgegenhaltungen:
- EP-A1- 1 627 821
- WO-A1-01/51375
- GB-A- 2 166 422
- NL-C2- 1 013 852

## Beschreibung

Die Erfindung betrifft eine Packung mit einem Schraubverschluss, einen Schraubverschluss mit einer Verschlusskappe sowie ein Herstellungsverfahren für eine Packung mit einem solchen Schraubverschluss bzw. einen erfindungsgemäßen Schraubverschluss, wie dies in den Ansprüchen 1, 7 sowie 12 beschrieben ist.

Die GB 2 166 422 A beschreibt einen Schraubverschluss mit einem ein Außengewinde aufweisenden Hals sowie einer Verschlusskappe mit einer in etwa zylindrischen Seitenwand, einem an der Seitenwand angeordneten Innengewinde zum Verschließen des Schraubverschlusses, sowie einer die Seitenwand abschließenden Stirnwand. Der Hals weist einen ersten Abschnitt mit einem ersten Durchmesser und einen zweiten Abschnitt mit einem zweiten Durchmesser auf, wobei der erste Durchmesser kleiner ist als der zweite Durchmesser und der zweite Abschnitt einem Packungsvolumen näher ist als der erste Abschnitt. Der Abschnitt mit dem kleineren Durchmesser ist als umlaufender, schräg nach innen verjüngender Vorsprung an der Innenfläche des Halses ausgebildet. Anschließend an den nach innen vorragenden umlaufenden Vorsprung ist ein kurzer weiterer Abschnitt des Halses ausgebildet, welcher den gleichen Innendurchmesser aufweist wie der zweite Abschnitt mit dem größeren Innendurchmesser. Die Verschlusskappe weist einen in etwa parallel zur Seitenwand umlaufenden und von dieser beabstandet nach innen versetzten Dichtring auf. Der Dichtring erstreckt sich bei geschlossenem Schraubverschluss von der Verschlusskappe über den ersten Abschnitt des Halses hinaus in Richtung Packungsvolumen, sodass der Dichtring zumindest teilweise in den zweiten Abschnitt des Halses hineinreicht.

Aus der EP 1 627 821 A1 ist ein weiterer Schraubverschluss bekannt geworden, der einen Hals mit einem Außengewinde sowie eine Verschlusskappe mit einer in etwa zylindrischen Seitenwand, einem an der Seitenwand angeordneten Innengewinde zum Verschließen des Schraubverschlusses, sowie einer die Seitenwand abschließenden Stirnwand aufweist. Die Verschlusskappe weist einen in etwa parallel zur Seitenwand umlaufenden und von dieser beabstandet nach innen versetzten Dichtring mit einem Dichtwulst auf. Bei aufgeschraubter Verschlusskappe liegt der Dichtwulst an der zylindrischen Innenwand des Halses an, wobei der Dichtring radial nach innen verformt ist und sich dabei mit seiner einer Längsachse näher liegenden Innenfläche an Stützorganen abstützt, welche an der Stirnwand angeordnet sind und von dieser vorragen. Der Dichtring mit seinem Dichtwulst liegt dabei unter einer radialen Vorspannung am Hals an.

Die NL 1 013 852 C2 zeigt einen anderen Schraubverschluss, bei dem der Hals einen vom Packungsvolumen weiter distanzierten ersten Abschnitt mit einer sich auf die vom Packungsvolumen abgewendete Seite konisch erweiternden Innenfläche aufweist. In einem Übergangsabschnitt geht die Innenfläche des Halsabschnitts mit einem kleineren Durchmesser in einen zweiten Abschnitt mit einem dazu größeren Durchmesser über, welcher dem Packungsvolumen näher liegend angeordnet ist als der erste Abschnitt. Die Verschlusskappe umfasst eine in etwa zylindrische Seitenwand, ein an der Seitenwand angeordnetes Innengewinde zum Verschließen des Schraubverschlusses, sowie eine die Seitenwand abschließende Stirnwand. Weiters weist die Verschlusskappe einen in etwa parallel zur Seitenwand umlaufenden und von dieser beabstandet nach innen versetzten Dichtring auf, der unter Vorspannung an der konisch erweiternd ausgebildeten Innenfläche des ersten Abschnittes anliegt. Das Außengewinde ist an der Außenseite des ersten Abschnitts des Halses angeordnet. Der mit dem an der Seitenwand angeordneten Abreißring zusammenwirkende Ansatz ist an der Außenseite des zweiten Halsabschnitts angeordnet.

Es sind bereits Verpackungen mit den verschiedensten Schraubverschlüssen bekannt geworden, bei denen eine durch einen Hals gebildete Ausgießöffnung mit einer Verschlusskappe über eine zusammenwirkende Gewindeanordnung verschließbar ist. Mittels eines Garantiebandes soll die Originalität des Verpackungsinhaltes angezeigt werden. Bei diesen Schraubverschlüssen kommt es bereits nach einer minimalen Abschraubbewegung der Verschlusskappe zu Undichtheiten zwischen dem Hals und der Verschlusskappe, obwohl das Garantieband noch unversehrt die Originalität anzeigt. Dies deshalb, da die Abdichtung nur stirnseitig erfolgt. Die axiale Verschiebung des Verschlusses im Zuge der Üffnungsbewegung führt sofort zu einer Undichtigkeit. Eine derartige Verschlusskappe wies weiters auch noch ausgehend von ihrer Stirnwand einen rohrförmig ausgebildeten als Dichtring ausgebildeten Ansatz auf, welcher hin auf die Innenfläche des Halses gerichtet ist. Eine vollständige Abdichtung konnte dabei nicht in allen Fällen erzielt werden. Problematisch ist auch die Tatsache, dass bei leicht geöffnetem Verschluss das Füllgut mit Umgebungsluft in Kontakt kommt und damit die Produktqualität nicht mehr gewährleistet ist. Der derzeit verwendete Verschluss kann somit die Dichtheit des Schraubverschlusses bis zum Reißen des Garantiebandes nicht erfüllen.

Es wurde weiters an der Stirnwand der Verschlusskappe im Bereich der Außenseite des Halses ein zusätzlicher Stützring angeordnet. Dies führte je nach gewählter Einlaufschräge am Stützring zu Zentrierproblemen und somit Problemen beim Aufschrauben. Weiters wurde in diesem Zusammenhang auch versucht, die Neigung und damit die Einfädelschräge des Stützrings zu verändern oder dessen Durchmesser zu verkleinern. Dies führte teilweise dazu, dass die Pressung erhöht wurde, wodurch zwar die Dichtheit erreicht, jedoch die Kräfte beim Aufsetzen zu hoch waren. Damit wurde das Gewinde bis ans Limit belastet. Bei einer Verringerung der Stützringhöhe sollte die Reibungswirkung später einsetzen. Damit wurde jedoch keine zufriedenstellende Dichtigkeit mehr erreicht.

Bei der Änderung der Dichtkontur wurde zwar auch eine ausreichende Dichtheit erzielt, jedoch waren wiederum die Aufdrehkräfte aufgrund der zu hohen Reibung zu hoch.

Es wurde auch versucht, den Dichtring mit einem schmalen Bund auszustatten, welcher den Hals verformen und dabei leicht eindrücke sollte. Dies sollte bei der Axialbewegung die erforderliche Anpresskraft garantieren. Durch diese Überdehnung findet der Hals nicht in den Stützring hinein und es führte somit zu Aufschraubproblemen. Eine Änderung der Einlaufschräge am Stützring führte lediglich dazu, dass der Hals teilweise am Stützring aufsitzt.

Des Weiteren wurde überhaupt auf das Vorsehen eines eigenen Stützrings im Inneren der Verschlusskappe verzichtet. Die dabei getroffenen Annahme, dass sich die Dichtlippe in den noch warmen Werkstoff des Halses der Packung eindrückt, schien aufzugehen. Aufgrund des noch nicht abgeschlossenen Schwindungsprozesses des Werkstoff des Halses, war nur eine teilweise Dichtigkeit gegeben.

Wie bereits zuvor zu den verschiedensten Versuchen zur Gestaltung der Dichtvorrichtung zwischen der Verschlusskappe und dem Hals der Packung beschrieben, wurde weiters versucht die Außenkontur des Halses im Bereich seiner Öffnung mit einer entschärften Variante des Stützrings gegen ein radiales Ausweichen zumindest teilweise zu hindern. So wurde im Eckbereich der Verschlusskappe zwischen dessen Seitenwand und Stirnwand mit radialer Distanz zur Außenkontur des Halses der Stützring vorgesehen. Dieser soll verhindern, dass der Hals beim Festziehen der Verschlusskappe nach außen ausweicht. Der Druck auf den Dichtring soll dadurch groß genug werden, dass die Vorspannung für die Sicherstellung der Dichtigkeit ausreicht. Auch dies führte zu keinem zufriedenstellenden Ergebnis.

Bei anderen bislang eingesetzten Verschlüssen war der Ausgießer durch eine eigene Membran als Originalitätssicherung verschlossen. Als zusätzlicher Schutz derselben ist ein Schraubverschluss aufgesetzt worden, welcher nach der Erstöffnung und dem Entfernen der Membran zum erneuten Verschließen der Verpackung diente. Damit war die Stellung des Schraubverschlusses bis zur Öffnung der abreißbaren Membran von keiner besonderen Bedeutung in Bezug auf die Dichtheit des Ausgießers.

Der vorliegenden Erfindung liegt die Aufgabe zugrunde, einen mit einer Verschlusskappe ausgestatteten Schraubverschluss und eine mit einem derartigen Schraubverschluss versehene Packung bereitzustellen sowie ein Verfahren zur Herstellung eines Schraubverschlusses anzugeben, bei dem der Schraubverschluss beim Öffnungsvorgang bis zum Abreißen des Garantiebandes bzw. Garantierings vollständig dicht bleibt.

Die Aufgabe der Erfindung wird durch eine Packung mit einem Schraubverschluss gemäß den Merkmalen des Anspruches 1 gelöst.

Vorteilhaft ist dabei, dass so für den Schrumpfvorgang des Halses ein gewisser Freiraum hin zum Dichtring geschaffen wird, um damit ein gewisses Spiel zur Verfügung zu haben. Weiters kann damit aber auch ein Verklemmen der Verschlusskappe mit dem Dichtring vermieden werden. Darüber hinaus kann so im Bereich des Halses eine vordefinierte Anlagefläche für den Dichtwulst in der vollständig aufgeschraubten bzw. aufgesetzten Position der Verschlusskappe geschaffen werden. Dadurch wird eine direkte Anlage des Dichtwulstes im Bereich des ersten Abschnittes mit dem geringeren Durchmesser vermieden, was bei dem nachfolgenden Schrumpfvorgang im Zuge der Verfestigung und Erkaltens des Werkstoffes zu bleibenden Verformungen und womöglich zu Undichtheiten führen könnte. Weiters kann so der Dichtring mit seinem Dichtwulst über den Abschnitt mit dem reduzierten Durchmesser hindurchgreifen. An dem der Verschlusskappe abgewandten Ende des Dichtrings ist eine Dichtlippe bzw. der Dichtwulst vorgesehen, welche bzw. welcher sich bei geschlossenem Schraubverschluss zumindest teilweise außerhalb des Abschnitts mit dem reduzierten Durchmesser befindet. In anderen Worten: Der Hals weist einen Abschnitt mit reduzierten Durchmesser auf, bei geschlossenem Schraubverschluss erstreckt sich dieser Abschnitt mit reduziertem Durchmesser über zumindest einen Teil der axialen Strecke von der Dichtlippe bis zu dem der Verschlusskappe zugewandten Ende des Halses. Durch das Distanzieren des Dichtrings von der Seitenwand der Verschlusskappe wird ein Aufnahmeraum für den Hals der Packung geschaffen. Durch das Zusammenwirken des Dichtwulstes bzw. der Dichtlippe mit dem Übergangsabschnitt bzw. Übergangsbereich zwischen dem ersten und dem zweiten Abschnitt sowie zumindest ein teilweises radiales Überragen des Dichtwulstes über den ersten Abschnitt mit dem geringeren Durchmesser hinaus, wird so bereits unmittelbar nach dem Aufschrauben bzw. Aufsetzen der Verschlusskappe auf den Hals eine rundum dichtende Dichtungsanordnung geschaffen. Dadurch ist es möglich, dass auch bei nicht vollständig aufgesetzter bzw. aufgeschraubter Verschlusskappe es zu keiner Undichtheit führen kann, da eine zwingende Anlage der Stirnfläche des Halses an der Innenfläche der Stirnwand der Verschlusskappe nicht notwendig ist.

Vorteilhaft ist weiters eine Ausbildung nach Anspruch 2, da dadurch eine ungewollte Verformung des Halses im Bereich der Verjüngung bis zum vollständigen Erkalten und Verfestigen des Werkstoffs vermieden werden kann.

Durch die Ausbildung nach Anspruch 3 ist es möglich, beim Öffnungsvorgang den Schraubverschluss über einen gewissen Axialweg relativ öffnen zu können, ohne dass dabei entweder bevorratetes Füllgut austritt oder ein ungewollter Zugang von Umgebungsluft hin zum Packungsvolumen möglich ist. Die dichtende Anlage wird nach einem gewissen Öffnungsweg noch so lange aufrecht erhalten, bis dass der Dichtwulst seine dichtende Anlage am ersten Abschnitt des Halses verliert.

Vorteilhaft ist auch eine Weiterbildung nach Anspruch 4, da dadurch beim Öffnungsvorgang mit zunehmendem Abschraubweg in Axialrichtung über einen gewissen vorbestimmbaren Abstand eine gesicherte Anlagefläche bereitgestellt werden kann. Darüber hinaus wird aber auch das Aufsetzen der Verschlusskappe, insbesondere im Bereich zwischen dem ersten Abschnitt und dem radial vorragenden Dichtwulst, erleichtert.

Bei der Ausgestaltung nach Anspruch 5 ist von Vorteil, dass so der Schraubverschluss der Packung eine gewisse Axialtoleranz aufweist, ohne dass gleich bei der geringsten Öffnungsbewegung ein Abreißen des Garantiebandes erfolgt. Damit kann aber auch ein vorbestimmter Verschwenkwinkel festgelegt werden, welcher unbedingt notwendig ist, um das Öffnen und damit Abreißen des Garantiebandes zu starten. Weiters wird damit aber auch eine gewisse Toleranz beim Aufschraub- bzw. Verschließweg des Schraubverschlusses geschaffen, da so auf alle Fälle das Garantieband hinterhalb des zum Öffnen des Garantiebandes vorgesehenen Absatzes zu liegen kommt.

Durch die Weiterbildung nach Anspruch 6 wird erreicht, dass so der Schraubverschluss der Packung eine gewisse Axialtoleranz aufweist, ohne dass gleich bei der geringsten Öffnungsbewegung ein Abreißen des Garantiebandes erfolgt. Damit kann aber auch ein vorbestimmter Axialweg festgelegt werden, welcher unbedingt notwendig ist, um das Öffnen und damit Abreißen des Garantiebandes zu starten.

Die Aufgabe der Erfindung kann aber eigenständig auch durch die Merkmale des Anspruches 7 betreffend den Schraubverschluss für die Packung gelöst werden. Die sich aus der merkmalskombination dieses Anspruches ergebenden Vorteile liegen darin, dass so für den Schrumpfvorgang des Halses ein gewisser Freiraum hin zum Dichtring geschaffen wird, um damit ein gewisses Spiel zur Verfügung zu haben. Weiters kann damit aber auch ein Verklemmen der Verschlusskappe mit dem Dichtring vermieden werden. Darüber hinaus kann so im Bereich des Halses eine vordefinierte Anlagefläche für den Dichtwulst in der vollständig aufgeschraubten bzw. aufgesetzten Position der Verschlusskappe geschaffen werden. Dadurch wird eine direkte Anlage des Dichtwulstes im Bereich des ersten Abschnittes mit dem geringeren Durchmesser vermieden, was bei dem nachfolgenden Schrumpfvorgang im Zuge der Verfestigung und Erkaltens des Werkstoffes zu bleibenden Verformungen und womöglich zu Undichtheiten führen könnte. Weiters kann so der Dichtring mit seinem Dichtwulst über den Abschnitt mit dem reduzierten Durchmesser hindurchgreifen. An dem der Verschlusskappe abgewandten Ende des Dichtrings ist eine Dichtlippe bzw. der Dichtwulst vorgesehen, welche bzw. welcher sich bei geschlossenem Schraubverschluss zumindest teilweise außerhalb des Abschnitts mit dem reduzierten Durchmesser befindet. In anderen Worten: Der Hals weist einen Abschnitt mit reduzierten Durchmesser auf, bei geschlossenem Schraubverschluss erstreckt sich dieser Abschnitt mit reduziertem Durchmesser über zumindest einen Teil der axialen Strecke von der Dichtlippe bis zu dem der Verschlusskappe zugewandten Ende des Halses. Durch das Distanzieren des Dichtrings von der Seitenwand der Verschlusskappe wird ein Aufnahmeraum für den Hals der Packung geschaffen. Durch das Zusammenwirken des Dichtwulstes bzw. der Dichtlippe mit dem Übergangsabschnitt bzw. Übergangsbereich zwischen dem ersten und dem zweiten Abschnitt sowie zumindest ein teilweises radiales Überragen des Dichtwulstes über den ersten Abschnitt mit dem geringeren Durchmesser hinaus, wird so bereits unmittelbar nach dem Aufschrauben bzw. Aufsetzen der Verschlusskappe auf den Hals eine rundum dichtende Dichtungsanordnung geschaffen. Dadurch ist es möglich, dass auch bei nicht vollständig aufgesetzter bzw. aufgeschraubter Verschlusskappe es zu keiner Undichtheit führen kann, da eine zwingende Anlage der Stirnfläche des Halses an der Innenfläche der Stirnwand der Verschlusskappe nicht notwendig ist.

Die sich aus den Merkmalen des Anspruches 8 ergebenden Vorteile liegen darin, dass so der Dichtring mit einem Dichtwulst sowie einem Teilabschnitt der Stirnwand einen Aufnahmeraum für den darin aufzunehmenden Abschnitt des Halses ausbildet. Der Dichtring weist ausgehend von der Stirnwand eine derartige Distanz auf, dass der Dichtwulst über den Abschnitt mit dem reduzierten Durchmesser hindurchgreifen kann. Durch das Zusammenwirken des Dichtwulstes bzw. der Dichtlippe mit dem aufzunehmenden Übergangsabschnitt bzw. Übergangsbereich zwischen dem ersten und dem zweiten Abschnitt sowie zumindest ein teilweises radiales Überragen des Dichtwulstes über den ersten Abschnitt mit dem geringeren Durchmesser hinaus, wird so bereits unmittelbar nach dem Aufschrauben bzw. Aufsetzen der Verschlusskappe auf den Hals eine rundum dichtende Dichtungsanordnung geschaffen.

Vorteilhaft ist aber auch eine Ausbildung nach Anspruch 9, da so im Bereich des Dichtrings im Zusammenwirken mit dem daran angeordneten Dichtwulst eine eindeutige Dichtfläche geschaffen werden kann, mit welcher unabhängig von der relativen Lage zwischen der Stirnfläche des Halses und der Innenfläche der Stirnwand der Verschlusskappe eine sichere umlaufende Abdichtung geschaffen werden kann.

Gemäß einer Ausbildung, wie im Anspruch 10 beschrieben, kann so ein einwandfreies Aufsetzen der Verschlusskappe auf den Hals zur Bildung des Schraubverschlusses erfolgen. Bei dieser Abschrägung bzw. Anschrägung handelt es sich im vorliegenden Ausführungsbeispiel um eine sogenannte Einführschräge.

Es erweist sich aber auch eine Ausgestaltung nach Anspruch 11 vorteilhaft, da so einerseits zwischen dem Dichtring und dem im Aufnahmeraum aufzunehmenden Hals eine gewisse radiale Distanzierung voneinander erzielt werden kann und andererseits ein rundum durchlaufender Federarm geschaffen werden kann, mit welchem der Dichtwulst an den jeweiligen damit zusammenwirkenden Abschnitt des Halses gedrückt werden kann.

Die Aufgabe der Erfindung wird aber unabhängig davon auch durch ein Verfahren zur Herstellung eines Schraubverschlusses gemäß den im Anspruch 12 angegebenen Merkmalen gelöst. Die sich aus der Merkmalskombination dieses Anspruches ergebenden Vorteile liegen darin, dass so für den Schrumpfvorgang des Halses ein gewisser Freiraum hin zum Dichtring geschaffen wird, um damit ein gewisses Spiel zur Verfügung zu haben. Weiters kann damit aber auch ein Verklemmen der Verschlusskappe mit dem Dichtring vermieden werden. Darüber hinaus kann so im Bereich des Halses eine vordefmierte Anlagefläche für den Dichtwulst in der vollständig aufgeschraubten bzw. aufgesetzten Position der Verschlusskappe geschaffen werden. Dadurch wird eine direkte Anlage des Dichtwulstes im Bereich des ersten Abschnittes mit dem geringeren Durchmesser vermieden, was bei dem nachfolgenden Schrumpfvorgang im Zuge der Verfestigung und Erkaltens des Werkstoffes zu bleibenden Verformungen und womöglich zu Undichtheiten führen könnte. Weiters kann so der Dichtring mit seinem Dichtwulst über den Abschnitt mit dem reduzierten Durchmesser hindurchgreifen. An dem der Verschlusskappe abgewandten Ende des Dichtrings ist eine Dichtlippe bzw. der Dichtwulst vorgesehen, welche bzw. welcher sich bei geschlossenem Schraubverschluss zumindest teilweise außerhalb des Abschnitts mit dem reduzierten Durchmesser befindet. In anderen Worten: Der Hals weist einen Abschnitt mit reduzierten Durchmesser auf, bei geschlossenem Schraubverschluss erstreckt sich dieser Abschnitt mit reduziertem Durchmesser über zumindest einen Teil der axialen Strecke von der Dichtlippe bis zu dem der Verschlusskappe zugewandten Ende des Halses. Durch das Distanzieren des Dichtrings von der Seitenwand der Verschlusskappe wird ein Aufnahmeraum für den Hals der Packung geschaffen. Durch das Zusammenwirken des Dichtwulstes bzw. der Dichtlippe mit dem Übergangsabschnitt bzw. Übergangsbereich zwischen dem ersten und dem zweiten Abschnitt sowie zumindest ein teilweises radiales Überragen des Dichtwulstes über den ersten Abschnitt mit dem geringeren Durchmesser hinaus, wird so bereits unmittelbar nach dem Aufschrauben bzw. Aufsetzen der Verschlusskappe auf den Hals eine rundum dichtende Dichtungsanordnung geschaffen. Dadurch ist es möglich, dass auch bei nicht vollständig aufgesetzter bzw. aufge schraubter Verschlusskappe es zu keiner Undichtheit führen kann, da eine zwingende Anlage der Stirnfläche des Halses an der Innenfläche der Stirnwand der Verschlusskappe nicht notwendig ist.

Weiters ist ein Vorgehen gemäß den im Anspruch 13 angegebenen Merkmalen vorteilhaft, da so ein Aufsetzen der Verschlusskappe mit deren Dichtring ohne Beschädigung bzw. Verformung des Halses erfolgen kann.

Schließlich ist eine weitere vorteilhafte Vorgehensweise im Anspruch 14 beschrieben, wodurch es möglich wird, mit einer derartigen Verschlusskappe einen unmittelbar zuvor hergestellten Hals einer Packung zu verschließen, ohne dass es dabei zu ungewollten Verformungen oder Zerstörungen kommen kann. Darüber hinaus wird aber auch bereits ab dem Aufsetzen der Verschlusskappe auf dem Hals eine vollständige Abdichtung des Schraubverschlusses der Packung erreicht.

Zum besseren Verständnis der Erfindung wird diese anhand der nachfolgenden Figuren näher erläutert.

Es zeigen jeweils in stark schematisch vereinfachter Darstellung:
- Fig. 1: eine Packung mit einem Unterteil und einem im Spritzgießverfahren hergestellten Oberteil, in Ansicht;
- Fig. 2: den Oberteil der Packung nach Fig. 1, in vergrößerter schaubildlicher Darstellung;
- Fig. 3: den Verschluss der Packung, im Teilschnitt sowie in vergrößerter schaubildlicher Darstellung;
- Fig. 4: ein Detail des Verschlusses nach Fig. 3, im Schnitt sowie in vergrößerter schaubildlicher Darstellung;
- Fig. 5: den Schraubverschluss in der aufgeschraubten Stellung der Verschlusskappe am Hals des Oberteils;
- Fig. 6: den Schraubverschluss in einer noch voneinander distanzierten Stellung der Verschlusskappe und des Halses des Oberteils;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

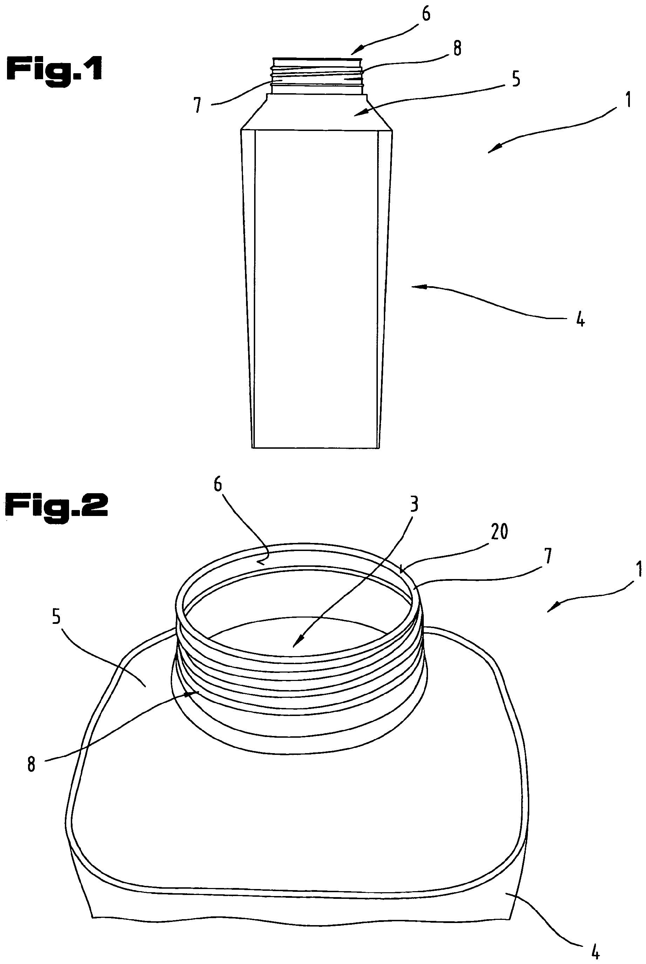

In den Fig. 1 bis 6 ist eine Packung 1 mit einem Schraubverschluss 2 gezeigt, mit welchem der vom einem Innenraum 3 der Packung 1 aufgenommene Inhalt bzw. das darin aufgenommene Füllgut, wie beispielsweise ein nicht näher dargestelltes fließfähiges Material, von der die Packung 1 umgebenden Umgebungsluft abgeschlossen bzw. abgedichtet ist. Die Packung 1 bzw. Verpackung weist je nach Anwendungsfall ein entsprechend ausgebildetes Packungsvolumen auf.

Die Packung 1 besteht gemäß der Fig. 1 aus einem Karton Unterteil 4 und einem zumeist im Spritzgießverfahren aus einem Kunststoffmaterial, wie z.B. HDPE, LDPE oder einer Mischung aus diesen Werkstoffen, hergestellten Oberteil 5.

Der Oberteil 5 der Packung 1 weist eine Ausgießöffnung 6 auf, welche von einem rohrförmigen, in etwa zylindrischen Hals 7 umgeben bzw. gebildet ist. Der Hals 7 steht von der Packung 1 ab und trägt ein Außengewinde 8. Eine Verschlusskappe 9 weist eine in etwa zylindrische Seitenwand 10 auf, an welcher ein Innengewinde 11 angeordnet ist, welches zum Verschließen des Schraubverschlusses 2 dient. Weiters umfasst die Verschlusskappe 9 auch noch eine die Seitenwand 10 umlaufend abschließende Stirnwand 12. Gemeinsam bildet die Verschlusskappe 9 mit dem Hals 7 des Oberteils 5 den Schraubverschluss 2 für die Packung 1 aus.

Die vorangehende und die folgende Beschreibung betreffen sowohl die Verschlusskappe 9, den Schraubverschluss 2, als auch die Packung 1 und das Herstellungsverfahren. Die beschriebenen Merkmale können dabei auch in anderen als den ausdrücklich gezeigten Kombinationen erfindungswesentlich sein, auch wenn dies nicht immer ausdrücklich ausformuliert ist.

Die vorliegende Erfindung betrifft den Schraubverschluss 2, der unter anderem für das Verschließen einer von der Firma Tetra Pak hergestellten Milchpackung eingesetzt werden kann.

Die Herstellung des Produktes bzw. der Packung 1 erfolgt vom Schneiden, Verkleben des Unterteils 4 aus Karton, Spritzen des Oberteils 5, Aufsetzen der Verschlusskappe 9 bzw. des Verschlusses bis zum Füllen der Milchprodukte und dem Verschließen der Packung 1 am Boden, als durchlaufender Prozess auf einer von der Firma Tetra Pack unter der geschützten Bezeichnung "Tetra Top" vertriebenen Abfüllanlage.

Ein wesentliches Anforderungsmerkmal für den Verschluss ist die prozessbedingte, extrem hohe Temperatur des Packungsoberteils, zum Zeitpunkt der Anbringung der Verschluss-Applikation, von ca. 85 bis 100°C. Dies führt bei einem geringfügig zu hohem Drehmoment beim Andrehen dazu, dass der Packungshals verformt und der Garantiering bzw. das Garntieband 13 nicht mehr einschnappen kann. So führt jede Belastung zu einer bleibenden Verformung. Daraus resultiert die Tatsache, dass der Dichtring 23 keine Vorspannung erzeugen soll.

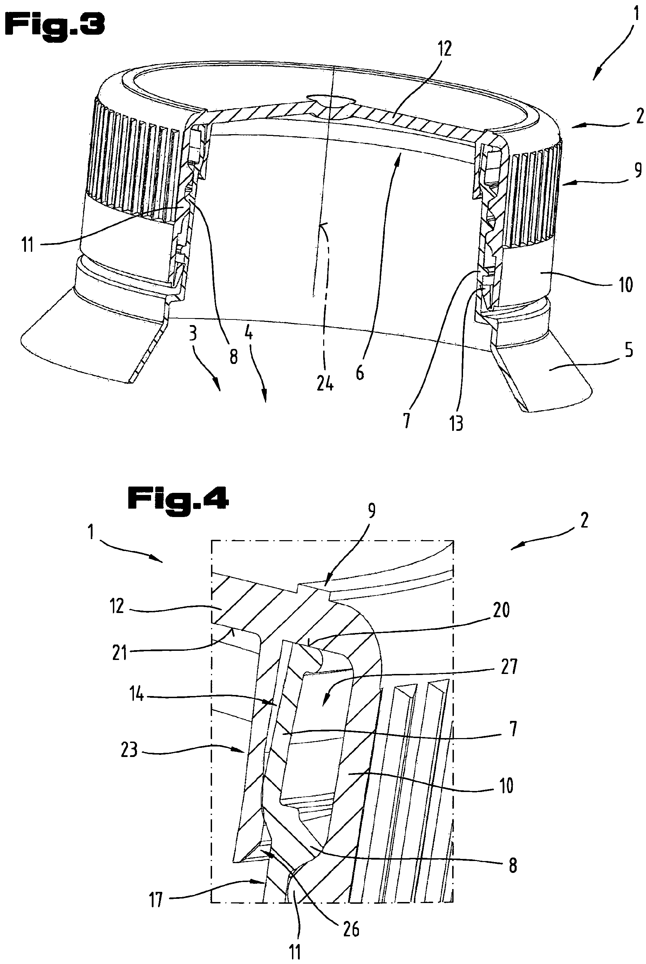

Beim Verschluss bzw. der Verschlusskappe 9 kann es sich um einen 38mm Verschluss mit einem Garantieband 13 - siehe Fig. 3 - handeln. Ist das Garantieband 13 unbeschädigt, garantiert dieses für die Originalität der Packung 1 und somit auch für die Originalität des Inhalts. Bevorzugt wird das Garantieband 13 als durchgehender umlaufender Abreißring ausgebildet.

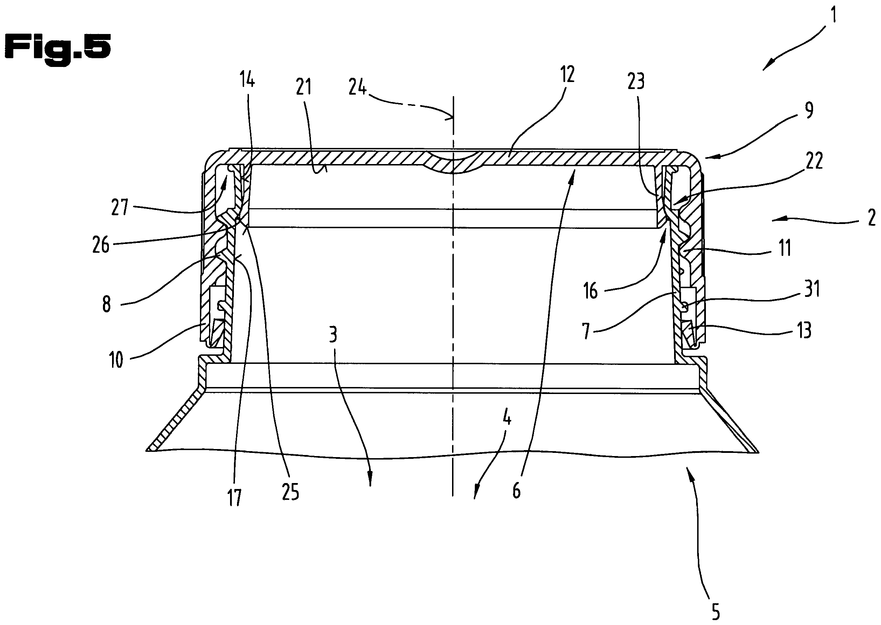

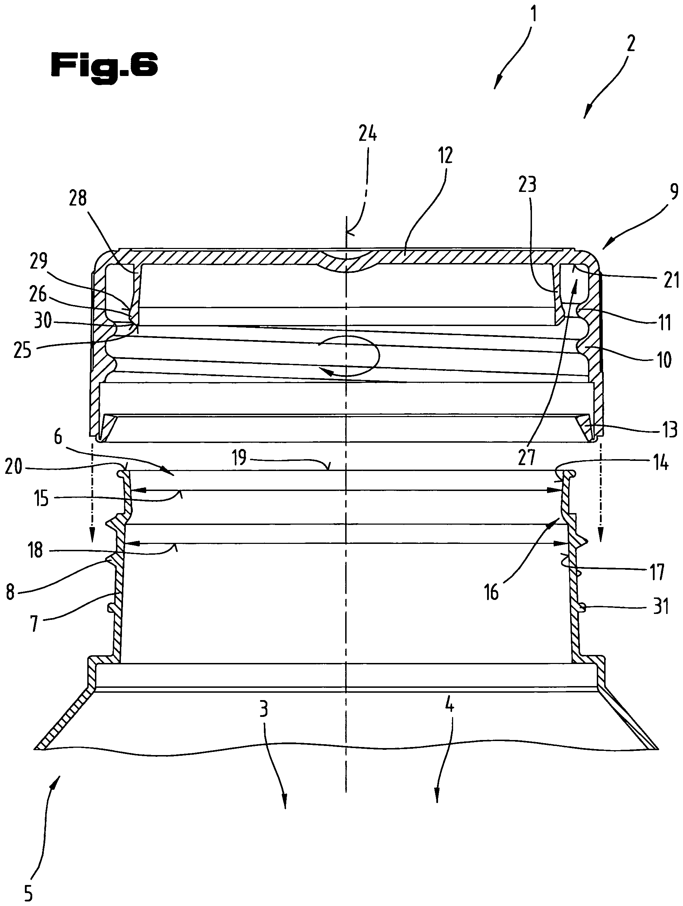

Wie nun besser aus den Fig. 5 und 6 zu ersehen ist, weist der Hals 7 des Oberteils 5 einen ersten Abschnitt 14 mit einem ersten Durchmesser 15 auf, welcher über einen Übergangsabschnitt 16 in einen zweiten Abschnitt 17 mit einem bezüglich des ersten Durchmessers 15 dazu größeren zweiten Durchmesser 18 übergeht. Somit ist der erste Durchmesser 15 kleiner als der zweite Durchmesser 18. Der erste Abschnitt 14 mit dem kleineren ersten Durchmesser 15 ist im Bereich eines Stirnendes 19 des Halses 7 angeordnet und somit vom Unterteil 4 bzw. dem Packungsvolumen weiter entfernt als der zweite Abschnitt 17, welcher somit dem Unterteil 4 bzw. dem Packungsvolumen näher liegt. Der Übergangsabschnitt 16 zwischen dem zweiten Abschnitt 17 mit dem größeren Durchmesser 18 ist als Verjüngung hin zum ersten Abschnitt 14 ausgebildet. Dieser Übergang kann stufenförmig, durch eine Schrägfläche oder aber auch durch eine gerundet ausgebildete Übergangsfläche gebildet sein.

Um eine reine Abdichtung des Schraubverschlusses 2 zwischen einer Stirnfläche 20 des Halses 7 und einer Innenfläche 21 der Stirnwand 12 der Verschlusskappe 9 zu vermeiden, ist hier eine eigene zusätzliche Dichtungsvorrichtung 22 vorgesehen.

So umfasst die Dichtungsvorrichtung 22 an der Verschlusskappe 9 einen in etwa rohrförmig ausgebildeten Dichtring 23, welcher mit einem radialen Abstand von der Seitenwand 10 hin in Richtung auf eine Längsachse 24 versetzt angeordnet ist. Ein erstes Ende 25 des Dichtrings 23 ist von der Stirnwand 12 der Verschlusskappe 9 distanziert angeordnet. Weiters kann im Bereich des ersten Endes 25 ein den Dichtring 23 radial überragender Dichtwulst 26 bzw. eine Dichtlippe angeordnet sein. Der Dichtwulst 26 ist ebenfalls umfänglich durchlaufend angeordnet und überragt den Dichtring 23 in radialer Richtung auf die von der Längsachse 24 abgewendete Seite hin auf die Seitenwand 10 der Verschlusskappe 9. Weiters bildet sich zwischen dem rohrförmigen Dichtring 23 und der Seitenwand 10 sowie einem Teilabschnitt der Innenfläche 21 der Stirnwand 12 ein umlaufender Aufnahmeraum 27 für zumindest einen Teilabschnitt des Halses 7 aus. Ein zweites Ende 28 des Dichtrings 23 ist mit der Stirnwand 12 der Verschlusskappe 9 verbunden. Bevorzugt werden die einzelnen zuvor beschriebenen Bauteile der Verschlusskappe 9 als zusammengehörige Baueinheit in einem Spritzgussvorgang hergestellt.

Die vorliegende Erfindung gewährleistet mit Hilfe einer Konusdichtung die Dichtigkeit während des Öffnungsvorgangs der Verschlusskappe 9, bis zum Reißen des Garantieringes bzw. des Garantiebandes 13. Der dafür konzipierte Dichtring 23 - siehe Fig. 4 - unterscheidet sich durch ein wesentliches Merkmal von allen üblichen Dichtungskonzepten.

Der Dichtring 23 ist im vorderen Bereich, also im Bereich seines ersten Endes 25, mit einer Dichtlippe bzw. mit dem bevorzugt in beide Richtungen angeschrägten Dichtwulst 26 ausgestattet. Der Dichtwulst 26 weist im Axialschnitt gesehen ausgehend von seiner radialen höchsten Erhebung mit der größten Distanz bezogen auf die Längsachse 24 zumindest eine, bevorzugt jedoch beidseitig hin auf den Dichtring 23 abfallend ausgerichtete Anschrägungen 29, 30 auf. Dabei kann es sich um Flächen handeln, welche im Axialschnitt gesehen die unterschiedlichsten Längsverläufe aufweisen können. Die die Anschrägung 29 bildende Fläche kann auch als Dichtfläche im Zusammenwirken mit der Verjüngung im Bereich des Übergangsabschnitts 16 bezeichnet werden. Die weitere von der Stirnwand 12 abgewendete Anschrägung 30 dient dazu, das Ende 25 des Dichtrings 23 bei der Montage bzw. dem Aufdrehen der Verschlusskappe 9 auf den Hals 7 ohne einer Zerstörung bzw. einer ungewollten Umformung des noch weichen Halses 7 insbesondere im Bereich seines ersten Abschnitts 14 hindurch führen zu können. Diese Anschrägung 30 kann somit auch als Einführschräge bezeichnet werden.

Dieser Dichtwulst 26, wird beim Verschließen der Packung 1, leicht über die für die Abdichtung vorgesehene zumeist zylindrische Fläche des ersten Abschnitts 14 des Halses 7 des Oberteils 5 der Packung 1 bis in den in seinem zweiten Durchmesser 15 erweiterten zweiten Abschnitt 17 bzw. Bereich nach vorne geschoben.

Durch dieses Konstruktionsmerkmal ist der Dichtring 23 nach dem Aufsetzten der Verschlusskappe 9 nur an der der Stirnwand 12 der Verschlusskappe 9 zugewendeten Anschrägung 29 des umlaufenden Dichtwulstes 26 leicht mit dem Hals 7 der Packung 1 in Berührung. Damit kann erreicht werden, dass bis zum Beginn der Öffnungsbewegung durch den Abschraubvorgang der Dichtwulst 26 bzw. die Dichtlippe vorspannungsfrei an der zuvor beschriebenen Verjüngung des Übergansabschnitts 16 zwischen den beiden Abschnitten 14, 17 anliegt. Der Schwindungsvorgang nach dem Spritzprozess kann daher trotz bereits aufgesetzter Verschlusskappe 9 ungehindert erfolgen. Erst durch die axiale Verschiebung im Zuge der Öffnungs- Drehbewegung wird der Dichtwulst 26 mit einer entsprechenden Vorspannung als abdichtendes Element wirksam.

Dieses Konzept stellt sicher, dass auf den Packungshals nach dem Aufsetzen der Verschlusskappe 9 mechanisch kein Druck ausgeübt wird.

Diese Maßnahme ist zwingend erforderlich, da jeder Druck auf den Hals 7 der Packung 1, durch die zuvor beschriebene hohe Temperatur in einem Temperaturbereich zwischen 85°C und 100°C zu einer bleibenden Verformung führt. Diese verhindert den Aufbau einer für die Dichtfunktion unbedingt erforderlichen Vorspannung zwischen der Dichtfläche des Verschlusses und der des Packungshalses.

Die Dichtlippe bzw. der Dichtwulst 26 ragt radial nach außen von dem Dichtring 23 vor und liegt vorzugsweise an dem der Verschlusskappe 9 abgewandten Beginn des ersten Abschnitts 14 mit dem reduzierten ersten Durchmesser 15 an. In anderen Worten: Hier geht der Hals 7 von dem zweiten Abschnitt 17 mit dem größeren zweiten Durchmesser 18 über eine Verjüngung bzw. einen Absatz in den ersten Abschnitt 14 mit geringerem ersten Durchmesser 15 über. Der Dichtwulst 26 liegt bei geschlossenem bzw. bei vollständig aufgeschraubtem Schraubverschluss 2 dichtend an der Verjüngung zwischen den beiden Abschnitten 14, 17 an. Betrachtet man den Übergangsabschnitt 16 ausgehend vom ersten Abschnitt 14 mit dem kleineren ersten Durchmesser 15 hin zum zweiten Abschnitt 17 mit dem dazu größeren Durchmesser 18 wird dann von einer Erweiterung gesprochen.

Die Dichtlippe bzw. der Dichtwulst 26 liegt bei geschlossenem Schraubverschluss 2 vorzugsweise an dieser Verjüngung bzw. an diesen Absatz im Bereich des Übergangsabschnitts 16 an. So erstreckt sich der der Dichtring 23 bei geschlossenem Schraubverschluss 2 von der Stirnwand 12 der Verschlusskappe 9 über den ersten Abschnitt 14 des Halses 7 hinaus in Richtung Packungsvolumen, sodass der Dichtwulst 26 zumindest teilweise in den zweiten Abschnitt 17 des Halses 7 hinein reicht.

Der Schraubverschluss 2 ist so ausgestaltet, dass beim Öffnen des Schraubverschlusses 2 die Dichtlippe bzw. der Dichtwulst 26 aus dem Absatz des Übergangsabschnitts 16 herausgleitet und dabei elastisch radial einwärts gedrückt wird und dann dichtend an der Innenseite des Halses 7 entlang gleitet, und zwar entlang des ersten Abschnitts 14 mit dem reduzierten ersten Durchmesser 15. Diese dichtende Anlage erfolgt rundum durchlaufend, auf alle Fälle solange, bis das Garantieband 13 zerstört ist.

Bei der Herstellung der Packung 1 ist der Hals 7 beim Verschließen des Schraubverschlusses 2 noch erwärmt und geweitet. Dies deshalb, da der gesamte Oberteil 5 an den vorgefertigten, eine rohrförmige Hülle bildenden Unterteil 4 angeformt wird. Dabei erfolgt jedoch keinerlei Verformung bzw. Umformung des Halses 7 bzw. Kragens während seines Abkühlvorganges durch die bereits aufgesetzte Verschlusskappe 9. Weiters kann der Unterteil 4 einen mehrlagigen Schichtaufbau aufweisen, wobei bevorzugt in bekannter Weise die dem aufzunehmenden Produkt zugewendete Innenfläche mit eine Beschichtung bzw. einer eigenen Lage aus einem Werkstoff gebildet ist, an welchen der Anformvorgang einwandfrei durchgeführt werden kann. So wird eine dauerhafte, feste und vor allem dichte Anbindung des Oberteils 5 an den Unterteil 4 erreicht.

Der Dichtring 23 kann beim Aufsetzen der Verschlusskappe 9 entsprechend vorspannungsfrei durch den Hals 7, und insbesondere durch den ersten Abschnitt 14 mit dem reduzierten ersten Durchmesser 15, geführt werden. Beim Erkalten zieht sich das Material des Halses 7 zusammen und die Dichtlippe bzw. der Dichtwulst 26 sitzt in dem Absatz am Übergang vom zweiten Abschnitt 17 mit dem größeren Durchmesser 18 zum ersten Abschnitt 14 mit dem kleineren Durchmesser 15.

Das Garantieband 13 bzw. der Garantiering ist in an sich bekannter Weise ausgebildet. Im vorliegenden Ausführungsbeispiel ist dieses Garantieband 13 in seiner Einsatzstellung als umgeschlagener Ring am Ende der Seitenwand 10 der Verschlusskappe 9 angeordnet, welcher sich an einem zumeist rundum durchlaufenden, außenliegenden Ansatz 31 des Halses 7 abstützt bzw. nach einem gewissen Abschraubweg zur Anlage daran kommt. Durch die dem Material bzw. dem Werkstoff innewohnenden elastischen Eigenschaften sowie dem möglichen Abschraubweg, kommt es bei der Abschraubbewegung zuerst zu einer Distanzierung der Stirnwand 12 der Verschlusskappe 9 von der Stirnfläche 20 des Halses 7 und somit noch vor einem Abreißen des Garantiebandes 13 zu einer Undichtheit im Bereich des Schraubverschlusses 2.

Bei der in Fig. 5 dargestellten vollständig aufgeschraubten Position der Verschlusskappe 9 auf den Hals 7 des Schraubverschlusses 2 der Packung 1 ist zu ersehen, dass das umgeschlagene Ende des Garantiebandes 13 in Axialrichtung von dem am Hals 7 angeordneten Ansatz 31 distanziert angeordnet ist. Je nach gewählter Distanz bzw. Abstand ist ein gewisser Abschraubweg und somit eine Drehung um die Längsachse 24 notwendig, um das Garantieband 13 zur Anlage am Ansatz 31 zu bringen. So kann beispielsweise beim Öffnen des Schraubverschlusses eine Drehung um die Längsachse 24 von mehr als 45°, bevorzugt von mehr als 70°, besonders bevorzugt von 85°, notwendig sein, um ein gegenseitiges Anliegen des Garantiebandes 13 am Ansatz 31 zu erzielen. Die relative Axialbewegung der Verschlusskappe 9 relativ bezüglich des Halses 7 kann beispielsweise in Richtung der Längsachse 24 gesehen mehr als 0,5mm, bevorzugt mehr als 0,6mm, besonders bevorzugt bei 0,7mm, liegen, um wiederum ein gegenseitiges Anliegen des Garantiebandes im Ansatz 31 zu erreichen.

Bis zum gegenseitigen Anliegen des Garantiebandes 13 am Ansatz 31 wird zwar die Stirnfläche 20 des Halses 7 von der Innenfläche 21 der Stirnwand 12 distanziert, es kommt jedoch aufgrund des Zusammenwirkens des Dichtwulstes 26 mit der Verjüngung im Bereich des Übergangsabschnitts 16 bzw. dem ersten Abschnitt 14 immer noch zu einer vollständigen Abdichtung der Ausgießöffnung 6.

Wie weiters aus einer Zusammenschau der Fig. 5 und 6 zu ersehen ist, ist der erste Abschnitt 14 des Halses 7 derart ausgebildet, dass sich dieser ausgehend vom Übergangsabschnitt 16 mit zunehmendem Abstand vom Packungsvolumen und somit hin zur Ausgießöffnung 6 weitet. Damit wird erreicht, dass bei geschlossenem Schraubverschluss 2 der Dichtring 23 und der Hals 7 mit zunehmendem Abstand vom Packungsvolumen zunehmend voneinander in radialer Richtung voneinander beabstandet sind.

Weiters ist es auch möglich, dass der Dichtring 23 der Verschlusskappe 9 einen bezüglich der Längsachse 24 geneigt dazu verlaufenden Längsverlauf aufweist. So kann der Dichtring 23 ausgehend von seinem ersten Ende 25 hin zum zweiten bzw. weiteren Ende 28, welches mit der Stirnwand 12 der Verschlusskappe 9 verbunden ist, einen hin in Richtung auf die Längsachse 24 verjüngenden Längsverlauf aufweisen. Damit kann die Verschlusskappe 9 auf den unmittelbar im Fertigungsprozess hergestellten Hals 7 des Oberteils 5 aufgeschoben und aufgeschraubt werden, ohne dass es dabei zu einer wesentlichen Verformung des noch nicht vollständig ausgehärteten Halses 7, insbesondere im Bereich seines ersten Abschnittes 14,kommt. Die zuvor beschriebene Aufweitung des ersten Abschnitts 14 des Halses 7 mit zunehmenden Abstand vom Packungsvolumen dient dazu, dass die Innenwand des Halses 7 im ersten Abschnitt 14 beim Öffnen des Schraubverschlusses 2 im Zusammenwirken mit dem Dichtwulst 26 als konusartige Dichtfläche fungiert bzw. wirkt.

Wie weiters bereits zuvor beschrieben, erfolgt das Aufsetzen der fertigen Verschlusskappe 9 auf den noch nicht vollständig ausgehärteten Hals 7 des an den Unterteil 4 angeformten Oberteils 5. Um einen ungehinderten Aushärtevorgang sowie den nachfolgenden Schrumpfvorgang des Kunststoffmaterials ermöglichen zu können, ohne dass es dabei zu ungewollten bleibenden Verformungen des Werkstoffs, insbesondere im Bereich des Halses 7, kommt, ist die geometrische Anordnung unter Zusammenwirken des Dichtwulstes 26 mit der Verjüngung im Bereich des Übergangsabschnittes 16 ein wichtiges Kriterium. Dazu ist eine entsprechende geometrische Abstimmung der Verschlusskappe 9 mit dem Hals 7 zu treffen, sodass bei vollständig aufgeschraubter Verschlusskappe 9 eine exakt vordefinierte relative Stellung zueinander zwischen der Verschlusskappe 9 und dem Hals 7 gewährleistet ist. Es muss auf alle Fälle gewährleistet sein, dass zumindest die der Stirnwand 12 zugewendete Anschrägung 29 des Dichtwulstes 26 im Bereich der Verjüngung des Übergangsabschnittes 16 zwischen den beiden Abschnitten 14, 17 zur Anlage kommt. Durch den im Zuge der weiteren Abkühlung mit einhergehenden Schrumpfvorgang des Halses 7 sowie der radialen Beabstandung zwischen dem ersten Abschnitt 14 und dem Dichtring 23 kann dies ungehindert erfolgen. Die vollständige Abdichtung des Packungsvolumens und dessen Inhalt erfolgt weiterhin davon unbeeinträchtigt im Bereich der Dichtungsvorrichtung 22, nämlich dem Dichtwulst 26 und dem Übergangsabschnitt 16.

Durch das Vorsehen dieser Dichtungsvorrichtung 22 ist auch eine exakte ebenflächige sowie gratfreie Ausbildung der Stirnfläche 20 des Halses 7 nicht unbedingt erforderlich, da in diesem Bereich eine vollständige Abdichtung nicht mehr notwendig ist.

Um ein unbeschädigtes Aufsetzen bzw. Aufschrauben der Verschlusskappe 9 auf den Hals 7 im Zusammenwirken des Außengewindes 8 mit dem Innengewinde 11 zu erreichen, ist auf eine entsprechende Abstimmung des Axialweges der Verschlusskappe 9 relativ bezüglich der vorgefertigten Packung 1, insbesondere deren Oberteil 5, Bedacht zu nehmen. Der Axialweg der Verschlusskappe 9 kann aus der Drehung bzw. Drehgeschwindigkeit der Verschlusskappe 9 sowie der Steigung der zusammenwirkenden Gewinde 8, 11 ermittelt werden. Eine mögliche Axialbewegung der vorgefertigten Packung 1 sowie deren Vorschubgeschwindigkeit ist ebenfalls noch mit zu berücksichtigen.

Der Packungskörper wird zumeist ausgehend von einer ebenen Materialbahn zu einem rohrförmigen Körper umgeformt und an einander zugewendeten Längsrändern miteinander verbunden. Im Bereich der Stirnseite des so gebildeten Hohlkörpers bzw. Schlauches wird der Oberteil 5 in einem Spritzgussvorgang daran angeformt. Auf diesen aus Kunststoff geformten Oberteil 5 der Packung 1 wird die fertige Verschlusskappe 9 aufgeschraubt. Unmittelbar daran anschließend erfolgt die Befüllung des Innenraums, wobei anschließend bodenseitig die Packung 1 verschlossen wird. Während des Aufsetzens bzw. Aufschraubens der Verschlusskappe 9 auf den Hals 7 ist der Werkstoff des Oberteils nach dem Spritzvorgang gerade soweit verfestigt, dass sich der Werkstoff unterhalb seiner Glasübergangstemparatur befindet. Damit reagiert dieser noch relativ weiche Werkstoff beim Aufsetzen der Verschlusskappe 9 auf jede weitere Verformung durch die bereits feste und steife Verschlusskappe 9. Da bereits in diesem Zustand das Füllprodukt in die Packung 1 eingefüllt ist, und sich diese dabei noch am Kopf stehend befindet, ist bereits in diesem Zustand eine vollständige Dichtheit zwischen dem Hals 7 und der Verschlusskappe 9 zu gewährleisten.

Der Ordnung halber sei abschließend darauf hingewiesen, dass zum besseren Verständnis des Aufbaus der Packung 1, des Schraubverschlusses 2 bzw. der Verschlusskappe 9 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Packung 1, des Schraubverschlusses 2 bzw. der Verschlusskappe 9, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

### Bezugszeichenaufstellung

- 1: Packung
- 2: Schraubverschluss
- 3: Innenraum
- 4: Unterteil
- 5: Oberteil

- 6: Ausgießöffnung
- 7: Hals
- 8: Außengewinde
- 9: Verschlusskappe
- 10: Seitenwand

- 11: Innengewinde
- 12: Stirnwand
- 13: Garantieband
- 14: erster Abschnitt
- 15: erster Durchmesser

- 16: Übergangsabschnitt
- 17: zweiter Abschnitt
- 18: zweiter Durchmesser
- 19: Stirnende
- 20: Stirnfläche

- 21: Innenfläche
- 22: Dichtungsvorrichtung
- 23: Dichtring
- 24: Längsachse
- 25: Ende

- 26: Dichtwulst
- 27: Aufnahmeraum
- 28: Ende
- 29: Anschrägung
- 30: Anschrägung

- 31: Ansatz

## Patentansprüche

1. Packung (1) mit einem Schraubverschluss (2), mit
einem Packungsvolumen zur Aufnahme eines fließfähigen Materials,
einem eine Ausgießöffnung (6) der Packung (1) umgebenden, von der Packung (1) abstehenden und ein Außengewinde (8) aufweisenden, in etwa zylindrischen Hals (7),
einer Verschlusskappe (9) mit einer in etwa zylindrischen Seitenwand (10), einem an der Seitenwand (10) angeordneten Innengewinde (11) zum Verschließen des Schraubverschlusses (2), sowie einer die Seitenwand (10) abschließenden Stirnwand (12), wobei der Hals (7) einen ersten Abschnitt (14) mit einem ersten Durchmesser (15) und einen zweiten Abschnitt (17) mit einem zweiten Durchmesser (18) aufweist, wobei der erste Durchmesser (15) kleiner ist als der zweite Durchmesser (18) und der zweite Abschnitt (17) dem Packungsvolumen näher ist als der erste Abschnitt (14),
die Verschlusskappe (9) einen in etwa parallel zu der Seitenwand (10) umlaufenden und von dieser beabstandet nach innen versetzten Dichtring (23) aufweist, wobei der Dichtring (23) bei geschlossenem Schraubverschluss (2) sich von der Verschlusskappe (9) über den ersten Abschnitt (14) des Halses (7) hinaus in Richtung Packungsvolumen erstreckt, sodass der Dichtring (23) zumindest teilweise in den zweiten Abschnitt (17) des Halses (7) hineinreicht,
**dadurch gekennzeichnet, dass**
der nach innen versetzte Dichtring (23) einen diesen radial überragenden Dichtwulst (26) aufweist und
sich der erste Abschnitt (14) des Halses (7) mit dem kleineren ersten Durchmesser (15) mit zunehmendem Abstand vom Packungsvolumen weitet, sodass bei geschlossenem Schraubverschluss (2) der Dichtring (23) und der Hals (7) mit zunehmendem Abstand vom Packungsvolumen zunehmend voneinander beabstandet sind und
der zweite Abschnitt (17) des Halses (7) mit dem zweiten größeren Durchmesser (18) über eine Verjüngung in den ersten Abschnitt (14) des Halses (7) übergeht, wobei der Dichtwulst (26) bei geschlossenem Schraubverschluss (2) an der Verjüngung dichtend anliegt.

2. Packung (1) nach Anspruch 1, **dadurch gekennzeichnet, dass** der Dichtwulst (26) vorspannungsfrei an der Verjüngung anliegt.

3. Packung (1) nach Anspruch 1, **dadurch gekennzeichnet, dass** der Dichtwulst (26) beim Öffnen des Schraubverschlusses (2) innen an dem ersten Abschnitt (14) des Halses (7) dichtend anliegt.

4. Packung (1) nach Anspruch 1, **dadurch gekennzeichnet, dass** die Innenwand des Halses (7) im ersten Abschnitt (14) beim Öffnen des Schraubverschlusses (2) im Zusammenwirken mit dem Dichtwulst (26) als konusartige Dichtfläche fungiert.

5. Packung (1) nach einem der vorangehenden Ansprüche, **dadurch gekennzeichnet, dass** der Schraubverschluss (2) ein Garantieband (13) umfasst, welches beim Öffnen des Schraubverschlusses (2) nach einer Drehung um eine Längsachse (24) von mehr als 45°, bevorzugter bei mehr als 70°, besonders bevorzugt bei 85°, an einem am Hals (7) angeordneten Ansatz (31) ansteht.

6. Packung (1) nach Anspruch 5, **dadurch gekennzeichnet, dass** der Schraubverschluss (2) mit dem Garantieband (13), welches beim Öffnen des Schraubverschlusses (2) bei einer Axialbewegung in Richtung der Längsachse (24) von mehr als 0,5 mm, bevorzugter bei mehr als 0,6 mm, besonders bevorzugt bei 0,7 mm, an einem am Hals (7) angeordneten Ansatz (31) ansteht.

7. Schraubverschluss (2) für eine Packung (1) mit einem Packungsvolumen zur Aufnahme eines fließfähigen Materials nach einem der Ansprüche 1 bis 6, mit einem ein Außengewinde (8) aufweisenden, in etwa zylindrischen Hals (7) zum Einfassen einer Ausgießöffnung (6) für die Packung (1), wobei der Hals (7) von der Packung (1) absteht,
einer Verschlusskappe (9) mit einer in etwa zylindrischen Seitenwand (10), einem an der Seitenwand (10) angeordneten Innengewinde (11) zum Verschließen des Schraubverschlusses (2), sowie einer die Seitenwand (10) abschließenden Stirnwand (12), wobei der Hals (7) einen ersten Abschnitt (14) mit einem ersten Durchmesser (15) und einen zweiten Abschnitt (17) mit einem zweiten Durchmesser (18) aufweist, wobei der erste Durchmesser (15) kleiner ist als der zweite Durchmesser (18) und der zweite Abschnitt (17) bei angebrachtem Schraubverschluss (2) dem Packungsvolumen näher ist als der erste Abschnitt (14),
die Verschlusskappe (9) einen in etwa parallel zu der Seitenwand (10) umlaufenden und von dieser beabstandet nach innen versetzten Dichtring (23) aufweist, wobei der Dichtring (23) bei geschlossenem Schraubverschluss (2) sich von der Verschlusskappe (9) über den ersten Abschnitt (14) des Halses (7) hinaus und, bei angebrachtem Schraubverschluss (2), in Richtung Packungsvolumen erstreckt, sodass der Dichtring (23) zumindest teilweise in den zweiten Abschnitt (17) des Halses (7) hineinreicht,
**dadurch gekennzeichnet, dass**
der nach innen versetzte Dichtring (23) einen diesen radial überragenden Dichtwulst (26) aufweist und
sich der erste Abschnitt (14) des Halses (7) mit dem kleineren ersten Durchmesser (15) bei angebrachtem Schraubverschluss (2) mit zunehmendem Abstand vom Packungsvolumen weitet, sodass bei geschlossenem Schraubverschluss (2) der Dichtring (23) und der Hals (7) mit zunehmendem Abstand vom Packungsvolumen zunehmend voneinander beabstandet sind und der zweite Abschnitt (17) des Halses (7) mit dem zweiten größeren Durchmesser (18) über eine Verjüngung in den ersten Abschnitt (14) des Halses (7) übergeht, wobei der Dichtwulst (26) bei geschlossenem Schraubverschluss (2) an der Verjüngung dichtend anliegt.

8. Schraubverschluss (2) nach Anspruch 7, **dadurch gekennzeichnet, dass** der an der Stirnwand (12) der Verschlusskappe (9) angeordnete Dichtring (23) mit der Seitenwand (10) und einem Teilabschnitt der Stirnwand (12) einen Aufnahmeraum (27) für den darin aufzunehmenden Hals (7) ausbildet.

9. Schraubverschluss (2) nach Anspruch 7 oder 8, **dadurch gekennzeichnet, dass** der Dichtwulst (26) zumindest an seiner der Stirnwand (12) zugewendeten Seite eine in Richtung auf den Dichtring (23) abfallend ausgerichtete Anschrägung (29) aufweist.

10. Schraubverschluss (2) nach einem der Ansprüche 7 bis 9, **dadurch gekennzeichnet, dass** der Dichtwulst (26) weiters an seiner von der Stirnwand (12) abgewendeten Seite eine in Richtung auf den Dichtring (23) abfallend ausgerichtete weitere Anschrägung (30) aufweist.

11. Schraubverschluss (2) nach einem der Ansprüche 7 bis 10, **dadurch gekennzeichnet, dass** der Dichtring (23) im Axialschnitt gesehen ausgehend von seinem von der Stirnwand (12) distanzierten Ende (25) hin zu seinem weiteren, mit der Stirnwand (12) verbundenen Ende (28), verjüngend ausgebildet ist.

12. Verfahren zur Herstellung eines Schraubverschlusses (2) für eine Packung (1) mit einem Packungsvolumen zur Aufnahme eines fließfähigen Materials gemäß Anspruch 7 oder einer Packung (1) mit einem Schraubverschluss (2) und mit einem Packungsvolumen zur Aufnahme eines fließfähigen Materials gemäß einem der Ansprüche 1 bis 6, mit den Schritten:
Bereitstellen eines ein Außengewinde (8) aufweisenden in etwa zylindrischen Halses (7) zum Einfassen einer Ausgießöffnung (6) der Packung (1), wobei der Hals (7) von der Packung (1) absteht,
Bereitstellen einer Verschlusskappe (9) mit einer in etwa zylindrischen Seitenwand (10), einem an der Seitenwand (10) angeordneten Innengewinde (11) zum Verschließen des Schraubverschlusses (2), sowie einer die Seitenwand (10) abschließenden Stirnwand (12),
wobei
der Hals (7) mit einem ersten Abschnitt (14) mit einem ersten Durchmesser (15) und einem zweiten Abschnitt (17) mit einem zweiten Durchmesser (18) gebildet wird, wobei der erste Durchmesser (15) kleiner ausgebildet wird als der zweite Durchmesser (18) und der zweite Abschnitt (17) bei angebrachtem Schraubverschluss (2) dem Packungsvolumen näher liegend ausgebildet wird als der erste Abschnitt (14),
die Verschlusskappe (9) mit einem in etwa parallel zu der Seitenwand (10) umlaufenden und
von dieser beabstandet nach innen versetzten Dichtring (23) versehen wird, wobei der Dichtring (23) bei geschlossenem Schraubverschluss (2) sich von der Verschlusskappe (9) über den ersten Abschnitt (14) des Halses (7) hinaus und, bei angebrachtem Schraubverschluss (2), in Richtung Packungsvolumen erstreckt, sodass der Dichtring (23) zumindest teilweise in den zweiten Abschnitt (17) des Halses (7) hineinreicht,.
**dadurch gekennzeichnet, dass**
der nach innen versetzte Dichtring (23) mit einem diesen radial überragenden Dichtwulst (26) versehen wird und
der erste Abschnitt (14) des Halses (7) mit dem kleineren ersten Durchmesser (15) sich mit zunehmendem Abstand vom Packungsvolumen erweiternd ausgebildet wird, sodass bei geschlossenem Schraubverschluss (2) der Dichtring (23) und der Hals (7) mit zunehmendem Abstand vom Packungsvolumen zunehmend voneinander beabstandet sind und
der zweite Abschnitt (17) des Halses (7) mit dem zweiten größeren Durchmesser (18) über eine Verjüngung in den ersten Abschnitt (14) des Halses (7) übergehend ausgebildet wird, wobei der Dichtwulst (26) bei geschlossenem Schraubverschluss (2) an der Verjüngung dichtend anliegt

13. Verfahren nach Anspruch 12, **dadurch gekennzeichnet, dass** der Schraubverschluss (2) während der Herstellung derart geschlossen wird, dass der Dichtring (23) durch den ersten Abschnitt (14) des Halses (7) vorspannungsfrei hindurchgeführt wird.

14. Verfahren nach Anspruch 13, **dadurch gekennzeichnet, dass** der Hals (7) während des Hindurchführens erwärmt ist.

## Claims

1. Packing (1) with a screw closure (2), having a packing volume for receiving a flowable material, a roughly cylindrical neck (7) for enclosing a pouring opening (6) of the packing (1), projecting from said packing (1) and exhibiting an external thread (8), a closing cap (9) with a roughly cylindrical side wall (10), an internal thread (11) arranged on the side wall (10) for closing the screw closure (2) and also an end wall (12) terminating the side wall (10), wherein the neck (7) has a first portion (14) with a first diameter (15) and a second portion (17) with a second diameter (18), wherein the first diameter (15) is smaller than the second diameter (18) and the second portion (17) is closer to the packing volume than the first portion (14),
the closing cap (9) has an inwardly offset sealing ring (23) running around roughly parallel to the side wall (10) and spaced apart therefrom, wherein
when the screw closure (2) is closed, the sealing ring (23) extends out from the closing cap (9) via the first portion (14) of the neck (7) in the direction of the packing volume, so that the sealing ring (23) extends at least partially into the second portion (17) of the neck (7),
**characterized in that**
the inwardly offset sealing ring (23) has a sealing bead (26) projecting radially thereto and
the first portion (14) of the neck (7) with the smaller first diameter (15) widens as the distance from the packing volume increases, so that when the screw closure (2) is closed the sealing ring (23) and the neck (7) are spaced further apart from one another as the distance from the packing volume increases and
the second portion (17) of the neck (7) with the second larger diameter (18) tapers into the first portion (14) of the neck (7), wherein the sealing bead (26) bears against the taper in a sealing manner when the screw closure (2) is closed.

2. The packing (1) according to claim 1, **characterized in that** the sealing bead (26) bears against the taper in a manner free from pretension.

3. The packing (1) according to claim 1, **characterized in that** the sealing bead (26) bears against the first portion (14) of the neck (7) on the inside in a sealing manner when the screw closure (2) is opened.

4. The packing (1) according to claim 1, **characterized in that** the inner wall of the neck (7) in the first portion (14) acts in collaboration with the sealing bead (26) as a cone-like sealing face when the screw closure (2) is opened.

5. The packing (1) according to one of the preceding claims, **characterized in that** the screw closure (2) comprises a tamper-evident strip (13) which, when the screw closure (2) is opened, after a rotation about a longitudinal axis (24) of more than 45°, preferably of more than 70°, particularly preferably of 85°, is in contact with a projection (31) arranged on the neck (7).

6. The packing (1) according to claim 5, **characterized in that** the screw closure (2) with the tamper-evident strip (13) which, when the screw closure (2) is opened with an axial movement in the direction of the longitudinal axis (24) of more than 0.5 mm, preferably of more than 0.6 mm, particularly preferably of 0.7 mm, is in contact with a projection (31) arranged on the neck (7).

7. A screw closure (2) for packing (1) having a packing volume for receiving a flowable material according to one of the claims 1 to 6, having a roughly cylindrical neck (7) for enclosing a pouring opening (6) for the packing (1) exhibiting an external thread (8), wherein the neck (7) projects from the packing (1),
a closing cap (9) with a roughly cylindrical side wall (10), an internal thread (11) for closing the screw closure (2) arranged on the side wall (10) and also an end wall (12) terminating the side wall (10), wherein the neck (7) exhibits a first portion (14) with a first diameter (15) and a second portion (17) with a second diameter (18), wherein the first diameter (15) is smaller than the second diameter (18) and the second portion (17) is closer to the packing volume than the first portion (14) when the screw closure (2) is fitted,
the closing cap (9) has an inwardly offset sealing ring (23) running around roughly parallel to the side wall (10) and spaced apart therefrom, wherein when the screw closure (2) is closed, the sealing ring (23) extends out from the closing cap (9) via the first portion (14) of the neck (7) and, when the screw closure (2) is fitted, in the direction of the packing volume, so that the sealing ring (23) extends at least partially into the second portion (17) of the neck (7),
**characterized in that**
the inwardly offset sealing ring (23) has a sealing bead (26) projecting radially thereto and
the first portion (14) of the neck (7) with the smaller first diameter (15) widens when the screw closure (2) is fitted as the distance from the packing volume increases, so that when the screw closure (2) is closed the sealing ring (23) and the neck (7) are spaced further apart from one another as the distance from the packing volume increases and the second portion (17) of the neck (7) with the second larger diameter (18) tapers into the first portion (14) of the neck (7), wherein the sealing bead (26) bears against the taper in a sealing manner when the screw closure (2) is closed.

8. The screw closure (2) according to claim 7, **characterized in that** the sealing ring (23) arranged on the end wall (12) of the closing cap (9) forms a receiving space (27) along with the side wall (10) and a partial section of the end wall (12) for the neck (7) to be received therein.

9. The screw closure (2) according to claim 7 or 8, **characterized in that** the sealing bead (26) has a bevel (29) oriented in a downward sloping manner in the direction of the sealing ring (23), at least on its side facing the end wall (12).

10. The screw closure (2) according to one of claims 7 to 9, **characterized in that** the sealing bead (26) furthermore exhibits a further bevel (30) oriented in a downward sloping manner in the direction of the sealing ring (23) on its side facing away from the end wall (12).

11. The screw closure (2) according to one of claims 7 to 10, **characterized in that** the sealing ring (23) is of tapered design viewed in axial cross section starting from its end (25) distal from the end wall (12) to its other end (28) connected to the end wall (12).

12. A method of producing a screw closure (2) for packing (1) having a packing volume for receiving a flowable material according to claim 7 or packing (1) having a screw closure (2) and having a packing volume for receiving a flowable material according to one of claims 1 to 6, comprising the steps:
provision of a roughly cylindrical neck (7) for enclosing a pouring opening (6) of the packing (1) exhibiting an external thread (8), wherein the neck (7) projects from the packing (1),
provision of a closing cap (9) with a roughly cylindrical side wall (10), an internal thread (11) arranged on the side wall (10) for closing the screw closure (2) and also an end wall (12) terminating the side wall (10), wherein
the neck (7) is formed with a first portion (14) with a first diameter (15) and a second portion (17) with a second diameter (18), wherein the first diameter (15) is smaller than the second diameter (18) and the second portion (17) is closer to the packing volume than the first portion (14) when the screw closure (2) is fitted,
the closing cap (9) is provided with an inwardly offset sealing ring (23) running around roughly parallel to the side wall (10) and spaced apart therefrom, wherein
when the screw closure (2) is closed the sealing ring (23) extends out from the closing cap (9) via the first portion (14) of the neck (7) and, when the screw closure (2) is fitted,
in the direction of the packing volume, so that the sealing ring (23) extends at least partially into the second portion (17) of the neck (7),
**characterized in that**
the inwardly offset sealing ring (23) is provided with a sealing bead (26) projecting radially thereto and
the first portion (14) of the neck (7) with the smaller first diameter (15) widens as the distance from the packing volume increases, so that when the screw closure (2) is closed the sealing ring (23) and the neck (7) are spaced further apart from one another as the distance from the packing volume increases and
the second portion (17) of the neck (7) with the second larger diameter (18) tapers into the first portion (14) of the neck (7), wherein the sealing bead (26) bears against the taper in a sealing manner when the screw closure (2) is closed.

13. The method according to claim 12, **characterized in that** the screw closure (2) is closed during production in such a manner that the sealing ring (23) is guided through the first portion (14) of the neck (7) in a manner free from pretension.

14. The method according to claim 13, **characterized in that** the neck (7) is warmed while the sealing ring is passed through.

## Revendications

1. Emballage (1) avec une fermeture vissée (2), avec
un volume d'emballage pour le logement d'un matériau fluide, un col (7) approximativement cylindrique, entourant une ouverture de versement (6) de l'emballage (1), disposé à une certaine distance de l'emballage (1) et comprenant un filetage externe (8),
un capuchon de fermeture (9) avec une paroi latérale (10) approximativement cylindrique, un filetage interne (11) disposé contre la paroi latérale (10), pour la fermeture de la fermeture vissée (2), ainsi qu'une paroi frontale (12) terminant la paroi latérale (10),
le col (7) présentant une première portion (14) avec un premier diamètre (15) et une deuxième portion (17) avec un deuxième diamètre (18), le premier diamètre (15) étant inférieur au deuxième diamètre (18) et la deuxième portion (17) étant plus proche du volume d'emballage que la première portion (14),
le capuchon de fermeture (9) comprenant une bague d'étanchéité (23) approximativement parallèle à la paroi latérale (10) et décalée par rapport à celle-ci vers l'intérieur,
la bague d'étanchéité (23) s'étendant, lorsque la fermeture vissée (2) est fermée, du capuchon de fermeture (9), au-delà de la première portion (14) du col (7) en direction du volume d'emballage, de façon à ce que la bague d'étanchéité (23) dépasse au moins partiellement dans la deuxième portion (17) du col (7),
**caractérisé en ce que**
la bague d'étanchéité (23) décalée vers l'intérieur comprend un bourrelet d'étanchéité (26) dépassant radialement de celle-ci et
la première portion (14) du col (7), avec le premier diamètre (15) plus petit, s'élargit, lorsque la distance par rapport au volume d'emballage augmente, de façon à ce que, lorsque la fermeture vissée (2) est fermée, la bague d'étanchéité (23) et le col (7) soient de plus en plus éloignés l'un de l'autre à mesure que la distance par rapport au volume d'emballage augmente et
la deuxième portion (17) du col (7), avec le deuxième diamètre (18) plus grand, présente une transition par l'intermédiaire d'un rétrécissement, vers la première portion (14) du col (7), le bourrelet d'étanchéité (26) s'appuyant de manière étanche contre le rétrécissement lorsque la fermeture vissée (2) est fermée.

2. Emballage (1) selon la revendication 1, **caractérisé en ce que** le bourrelet d'étanchéité (26) s'appuie sans précontrainte contre le rétrécissement.

3. Emballage (1) selon la revendication 1, **caractérisé en ce que** le bourrelet d'étanchéité (26) s'appuie à l'intérieur de manière étanche contre la première portion (14) du col (7) lors de l'ouverture de la fermeture vissée (2).

4. Emballage selon la revendication 1, **caractérisé en ce que** la paroi interne du col (7) dans la première portion (14) interagit, lors de l'ouverture de la fermeture vissée (2), avec le bourrelet d'étanchéité (26) comme une surface d'étanchéité conique.

5. Emballage selon la revendication 1, **caractérisé en ce que** la fermeture vissée (2) comprend une bande de garantie (13) qui s'appuie contre un embout (31) disposé sur le col (7) lors de l'ouverture de la fermeture vissée (2) après une rotation autour d'un axe longitudinal (24) de plus de 45°, de préférence de plus de 70°, plus particulièrement de 85°.

6. Emballage (1) selon la revendication 5, **caractérisé en ce que** la fermeture vissée (2) avec la bande de garantie (13), qui s'appuie, lors de l'ouverture de la fermeture vissée (2) lors d'un mouvement axial en direction de l'axe longitudinal (24) de plus de 0,5 mm, de préférence de plus de 0,6 mm, plus particulièrement de 0,7 mm, contre un embout (31) disposé sur le col (7).

7. Fermeture vissée (2) pour un emballage (1) avec un volume d'emballage pour le logement d'un matériau fluide selon l'une des revendications 1 à 6, avec un col (7), approximativement cylindrique, présentant un filetage externe (8), pour l'encadrement d'une ouverture de versement (6) pour l'emballage (1), le col (7) étant distant de l'emballage (1),
un capuchon de fermeture (9) avec une paroi latérale (10) approximativement cylindrique, un filetage interne (11) disposé sur la paroi latérale (10), pour la fermeture de la fermeture vissée (2), ainsi qu'une paroi frontale (12) terminant la paroi latérale (10),
le col (7) comprenant une première portion (14) avec un premier diamètre (15) et une deuxième portion (17) avec un deuxième diamètre (18), le premier diamètre (15) étant inférieur au deuxième diamètre (18) et la deuxième portion (17) étant, lorsque la fermeture vissée (2) est montée, plus proche du volume d'emballage que la première portion (14),
le capuchon de fermeture (9) comprenant une bague d'étanchéité (23) approximativement parallèle à la paroi latérale (10) et décalée par rapport à celle-ci vers l'intérieur, la bague d'étanchéité (23) s'étendant, lorsque la fermeture vissée (2) est fermée, du capuchon de fermeture (9), au-delà de la première portion (14) du col (7) et, lorsque la fermeture vissée (2) est montée, en direction du volume d'emballage, de façon à ce que la bague d'étanchéité (23) dépasse au moins partiellement dans la deuxième portion (17) du col (7),
**caractérisé en ce que**
la bague d'étanchéité (23) décalée vers l'intérieur comprend un bourrelet d'étanchéité (26) dépassant radialement de celle-ci et
la première portion (14) du col (7), avec le premier diamètre (15) plus petit, s'élargit, lorsque la distance par rapport au volume d'emballage augmente, de façon à ce que, lorsque la fermeture vissée (2) est fermée, la bague d'étanchéité (23) et le col (7) soient de plus en plus éloignés l'un de l'autre à mesure que la distance par rapport au volume d'emballage augmente et
la deuxième portion (17) du col (7), avec le deuxième diamètre (18) plus grand, présente une transition, par l'intermédiaire d'un rétrécissement, vers la première portion (14) du col (7), le bourrelet d'étanchéité (26) s'appuyant de manière étanche contre le rétrécissement lorsque la fermeture vissée (2) est fermée.

8. Fermeture vissée (2) selon la revendication 7, **caractérisée en ce que** la bague d'étanchéité (23) disposée sur la paroi frontale (12) du capuchon de fermeture (9) constitue, avec la paroi latérale (10) et une portion partiellement de la paroi frontale (12), un espace de logement (27) pour le col (7) qui doit y être logé.

9. Fermeture vissée (2) selon la revendication 7 ou 8, **caractérisée en ce que** le bourrelet d'étanchéité (26) comprend au moins, sur son côté orienté vers la paroi frontale (12), un chanfrein (29) orienté de manière tombante en direction de la bague d'étanchéité (23).

10. Fermeture vissée (2) selon l'une des revendications 7 à 9, **caractérisée en ce que** le bourrelet d'étanchéité (26) comprend en outre, sur son côté opposé à la paroi frontale (12), un chanfrein (30) orientée de manière tombante en direction de la bague d'étanchéité (23).

11. Fermeture vissée (2) selon l'une des revendications 7 à 10, **caractérisée en ce que** la bague d'étanchéité (23) est conçue de façon à se rétrécir, en coupe axiale, à partir de son extrémité (25) distante de la paroi frontale (12) en direction de son extrémité (28) reliée avec la paroi frontale (12).

12. Procédé de fabrication d'une fermeture vissée (2) pour un emballage (1) avec un volume d'emballage pour le logement d'un matériau fluide selon la revendication 7 ou un emballage (1) avec une fermeture vissée (2) et avec un volume d'emballage pour le logement d'un matériau fluide selon l'une des revendications 1 à 6, avec les étapes suivantes :
préparation d'un col (7) approximativement cylindrique comprenant un filetage externe (8), pour l'encadrement d'une ouverture de versement (6) de l'emballage (1), le col (7) étant distant de l'emballage (1),
préparation d'un capuchon de fermeture (9) avec une paroi latérale (10) approximativement cylindrique, un filetage interne (11) disposé sur la paroi latérale (10),
pour la fermeture de la fermeture vissée (2), ainsi qu'une paroi frontale (12) terminant la paroi latérale (10),
le col (7) étant formé avec une première portion (14) avec un premier diamètre (15) et
une deuxième portion (17) avec un deuxième diamètre (18), le premier diamètre (15) étant inférieur au deuxième diamètre (18) et la deuxième portion (17) étant plus proche du volume d'emballage que la première portion (14) lorsque la fermeture vissée (2) est montée,
le capuchon de fermeture (9) étant muni d'une bague d'étanchéité (23) approximativement parallèle à la paroi latérale (10) et décalée par rapport à celle-ci vers l'intérieur,
la bague d'étanchéité (23) s'étendant, lorsque la fermeture vissée (2) est fermée, du capuchon de fermeture (9), au-delà de la première portion (14) du col (7), lorsque la fermeture vissée (2) est montée, en direction du volume d'emballage, de façon à ce que la bague d'étanchéité (23) dépasse au moins partiellement dans la deuxième portion (17) du col (7),
**caractérisé en ce que**
la bague d'étanchéité (23), décalée vers l'intérieur, est munie d'un bourrelet d'étanchéité (26) dépassant radialement de celle-ci et
la première portion (14) du col (7), avec le premier diamètre (15) plus petit, s'élargit lorsque la distance par rapport au volume d'emballage augmente, de façon à ce que,
lorsque la fermeture vissée (2) est formée, la bague d'étanchéité (23) et le col (7) soient de plus en plus éloignés l'un de l'autre lorsque la distance par rapport au volume d'emballage augmente et
la deuxième portion (17) du col (7), avec le deuxième diamètre (18) plus grand, effectue,
par l'intermédiaire d'un rétrécissement, une transition vers la première portion (14) du col (7),
le bourrelet d'étanchéité (26) s'appuyant de manière étanche contre le rétrécissement lorsque la fermeture vissée (2) est fermée.

13. Procédé selon la revendication 12, **caractérisé en ce que** la fermeture vissée (2) est fermée pendant la fabrication de façon à ce que la bague d'étanchéité (23) soit guidée à travers la première portion (14) du col (7) sans précontrainte.

14. Procédé selon la revendication 13, **caractérisé en ce que** le col (7) est chauffé pendant le guidage.
